# EUROPÄISCHE PATENTSCHRIFT

(11) **EP 0 806 529 B1**
(45) Veröffentlichungstag und Bekanntmachung des Hinweises auf die Patenterteilung: **25.02.2004**
(21) Anmeldenummer: 96107469.7
(22) Anmeldetag: 10.05.1996
(51) Int. Cl.: E04F 15/18, E04F 15/22, F24D 3/14

(54) **Boden bzw. Unterlagsboden mit einem Wärmedämmelement**
Floor or floor base with a thermal-insulation element
Plancher ou base de plancher avec un élément d'isolation thermique

(43) Veröffentlichungstag der Anmeldung: 12.11.1997
(73) Patentinhaber: Reichmuth, Walter, 8852 Altendorf (CH)
(72) Erfinder: Reichmuth, Walter, 8852 Altendorf (CH)
(74) Vertreter: Patentanwälte Schaad, Balass, Menzl & Partner AG

(56) Entgegenhaltungen:
- BE-A- 433 287
- DE-A- 2 423 471
- DE-A- 2 515 187
- DE-A- 2 639 471
- FR-A- 2 296 069
- US-A- 3 103 042

## Beschreibung

Die Erfindung bezieht sich auf einen Boden mit wenigstens einem Wärmedämmelement gemäss dem Oberbegriff von Anspruch 1 sowie auf einen Unterlagsboden, für einen Bodenbelag mit wenigstens einem Wärmedämmelement gemäss dem Oberbegriff von Anspruch 2.

Die Wärmedämmelemente in solchen boden dienen ausser zur Wärmedämmung als Unterlage für den darüber anzuordnenden Bodenbelag. Sie können zudem zur Aufnahme von Heizungsrohren einer Bodenheizung dienen. Ein Boden mit wenigstens einem Wärmedämmelement ist bekannt aus DE-A-25 15 187.

DE-A-25 151 87 bezieht sich auf eine elektrische Bodenheizung mit einem flächenhaft angeordneten Heizleiter.

DE-A-26 39 471 bezieht sich auf ein Verfahren zum Herstellen eines Gebändefussbodens. FR-A-22 96 069 bezieht sich auf eine Zusammengesetzte Vorrichtung aus unterlagen, die als kleine Stützen dienen.

Ein konventioneller Unterlagsboden weist wie algemein bekannt beispielsweise auf einer Wärmedämmschicht angeordnet einen Zementüberzug aus einem Sand-Zement-Gemisch auf, in welchen Bodenheizungsrohre aus Kupfer oder Kunststoff eingebettet sind. Unterhalb der Wärmedämmschicht befindet sich eine Schicht aus Trittschalldämmatten, beispielsweise aus Steinwolle oder Spezialpolystyrol. Zwischen der Wärmedämmschicht und dem Zementüberzug ist eine Folie aus PVC eingelegt.

Der Zementüberzug wirkt bei einem solchen konventionellen Unterlagsboden als Wärmespeicher. Diese auf den ersten Blick vorteilhafte Eigenschaft ist jedoch in der Praxis mit erheblichen Nachteilen verbunden, nämlich dann, wenn eine Änderung der Wärmeabgabe zur Aufrechterhaltung der gewünschten Raumtemperatur erforderlich ist, beispielsweise, wenn am Morgen eine rasche Aufheizung gewünscht wird oder auch dann, wenn bei Sonneneinstrahlung die Heizwirkung unerwünscht ist. In diesen Fällen ist eine solche Bodenheizung viel zu träge und nur ungenügend regelbar.

Ein solcher aus der Praxis bekannte Unterlagsboden benötigt eine lange Trocknungszeit, welche insbesondere von der Luftfeuchte abhängt. Dadurch entsteht eine unerwünschte Wartezeit, bis der Bodenbelag aufgebracht werden kann. Ferner ist die Wärmedämmschicht eines solchen Unterlagsbodens der Belastung durch den Zementüberzug sowie durch den darüber anzuordnenden Bodenbelag ausgesetzt, was zu Setzungserscheinungen führen kann. Weiter ist bei gegebener Dicke der Konstruktion die Dicke der Wärmedämmschicht erheblich eingeschränkt.

Der Erfindung liegt die Aufgabe zugrunde, einen Boden und einen Unterlagsboden mit wenigstens einem Wärmedämmelement mit hohen Wärmedämmeigenschaften zu schaffen, welcher möglichst ohne Wartezeit erstellt werden kann.

Die gestellte Aufgabe wird erfindungsgemäss durch einen Boden mit den Merkmalen des Anspruchs 1 und durch einen Unterlagsboden mit den Merkmalen des Anspruchs 2 gelöst.

Bei der erfindungsgemässen Lösung ist die Wärmedämmschicht vollständig entlastet, da der darüber anzuordnen bestimmte Bodenbelag ausschliesslich auf den Tragkernen abgestützt ist. Durch eine solche Ausführung erübrigt sich ein auf der Wärmedämmschicht liegender Zementüberzug.

Bei einer bevorzugten Ausführungsform der Erfindung nach Anspruch 7 ergibt sich eine gute Dämpfung des Trittschalls infolge der grossen Höhe der als Trittschalldämpfungskörper ausgebildeten Tragkerne. Ausserdem lässt sich die Tragfähigkeit durch die Wahl bzw. Zusammensetzung des Werkstoffes und/oder durch den Querschnitt der Tragkerne den jeweiligen Erfordernissen anpassen, je nachdem, ob es sich beispielsweise um eine Turnhalle, eine Fabrikhalle oder eine Wohnung handelt.

Eine Ausgestaltung nach Anspruch 8 ermöglicht die vorteilhafte Wiederverwendung beispielsweise von alten Fahrzeugreifen. Obwohl die Wärmedämmschicht auch aus relativ losem Werkstoff wie Mineralfasern oder Hüttenwolle herstellbar ist, ist die Verwendung in Form von Platten nach Anspruch 6 besonders vorteilhaft beim Verlegen.

Rasterartig angeordnete Tragkerne nach Anspruch 9 gewährleisten eine gleichmässige Lastverteilung, bezogen auf die gesamte Fläche des Unterlagsbodens. Bei Einhaltung des beanspruchten Abstandes zwischen den Tragkernen wird die Montagearbeit erleichtert.

Gemäss der vorliergenden Erfindung ergibt sich ein Hohlraum zwischen der Oberfläche der Wärmedämmschicht und der darüber anzuordnenden Unterlage für einen Bodenbelag. In diesem Hohlraum ist ein Heizungsrohr einer Bodenheizung angeordnet werden. Ferner erhöht der Hohlraum die Dämmwirkung für den Wärmedurchgang.

Durch eine bevorzugte Ausführungsform nach Anspruch 3 erhält die Bodenheizung die Eigenschaften einer Strahlungsheizung, da die vom frei verlegten Heizungsrohr abgestrahlte Wärme in Richtung Bodenbelag reflektiert wird. Dies führt insbesondere zu einer Einsparung von Energie, da die Wärmeabgabe durch Strahlung fast ausschliesslich in Richtung Bodenbelag und damit in Richtung des zu beheizenden Raumes erfolgt. Ferner ist die Reaktionszeit erheblich kürzer als bei einbetonierten Heizungsrohren, so dass eine solche Heizungsanlage wesentlich besser regelbar ist.

Bei einer Ausführungsform nach Anspruch 4 wird auch der den Hohlraum durchsetzende Tragkern in die Reflektionswirkung miteinbezogen.

Eine Ausführungsform nach Anspruch 10 ermöglicht den Ausgleich von Unebenheiten.

Anspruch 5 beschreibt eine bevorzugte Ausführungsform, welche das Verlegen von elektrischen Leitungen in den Unterlagsboden ermöglicht.

Die erfindungsgemässe Lösung nach Anspruch 11 gewährleistet eine gleichmässige Verteilung und Wärmeleitung über die gesamte Fläche des Bodens.

Eine Ausführungsform nach Anspruch 12 dient zu einer weiteren Verbesserung der Wärmeübertragung.

Anhand der Zeichnungen werden Ausführungsbeispiele der Erfindung näher erläutert. Es zeigt rein schematisch:
- Fig. 1: Einen Abschnitt eines Unterlagsbodens mit optimalen Reflektionseigenschaften, bei abgenommener Unterlage für den Bodenbelag, in der Draufsicht,
- Fig. 2: einen Abschnitt eines unterschiedlich ausgebildeten Unterlagsbodens, bei abgenommener Unterlage für den Bodenbelag, in der Draufsicht,
- Fig. 3: einen Längsschnitt durch eine Wärmedämmschicht und einen darin eingebetteten Tragkern, der von einem kegelartigen bzw. flanschartigen Kranz aus dem Werkstoff der Wärmedämmschicht umgeben ist, gemäss einer Ausführung nach Fig. 1,
- Fig. 4: eine Schnittansicht durch eine Wärmedämmschicht und einen darin eingebetteten Tragkern, der von einem zylindrischen Kranz aus dem Werkstoff der Wärmedämmschicht umgeben ist, gemäss einer Ausführung nach Fig. 2,
- Fig. 5: eine Schnittansicht durch eine Wärmedämmschicht und einen darin eingebetteten, in der Höhe verstellbaren Tragkern,
- Fig. 6: eine Schnittansicht durch eine Wärmedämmschicht und einen darin eingebetteten, mit der Wärmedämmschicht bündigen Tragkern,
- Fig. 7: eine Schnittansicht durch einen Unterlagsboden mit Heizungsrohren und eine Wandkonstruktion, mit auf dem Unterlagsboden angeordneter Trägerplatte aus armiertem Beton,
- Fig. 8: eine Schnittansicht durch einen Unterlagsboden mit Heizungsrohren und eine Wandkonstruktion, mit auf dem Unterlagsboden als Trägerplatte angeordnetem Lochblech und
- Fig. 9: eine Schnittansicht durch einen Unterlagsboden und eine Wandkonstruktion, mit auf dem Unterlagsboden als Trägerplatten angeordneten Steinplatten.

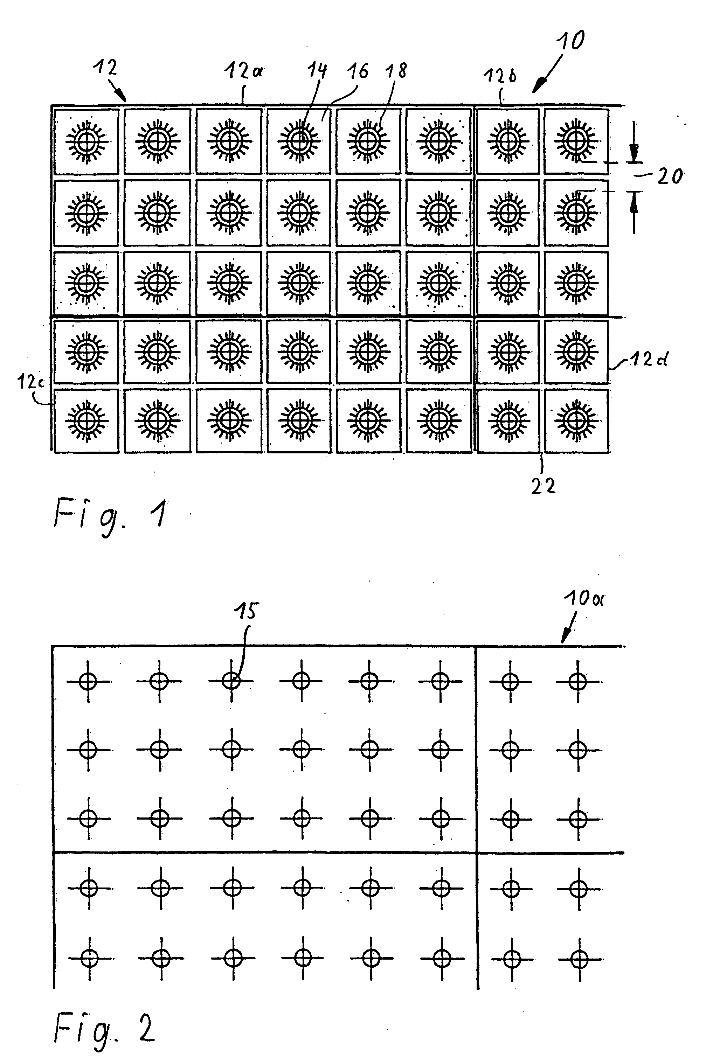

Der in der Fig. 1 dargestellte Abschnitt eines Unterlagsbodens **10** ist aus Wärmedämmelementen **12,** im einzelnen **12a, 12b**, **12c**, **12d** zusammengesetzt. Jedes dieser Elemente **12** weist eine Mehrzahl von rasterartig angeordneten Tragkernen **14** auf, welche sich vertikal durch eine Wärmedämmschicht **16** hindurcherstrecken. Die Tragkerne **14** dienen zum Tragen einer in Fig. 1 nicht dargestellten plattenförmigen Unterlage, auf welche ein ebenfalls in Fig. 1 nicht dargestellter Bodenbelag aufgebracht wird.

Die Tragkerne **14** überragen auf der Oberseite die Wärmedämmschicht **16** und sind in ihrem herausragenden Abschnitt von einem flanschartigen bzw. kegelartigen Kranz **18** umgeben, der vorzugsweise aus dem Werkstoff der Wärmedämmschicht **16** besteht.

Der Abstand der Tragkerne **14** voneinander ist vorzugsweise derart bemessen, dass eine mit der Montage beschäftigte Person ihren Fuss dazwischen setzen kann, so dass der Zwischenraum **20** für diesen Zweck mindestens 10 cm betragen sollte. Für eine Fabrikhalle, eine Werkstatt oder anderweitige Böden für hohe Belastung ist es jedoch wichtig, die Rasterabstände kleiner zu wählen.

Der Raum zwischen den Tragkernen **14** ist zum Anordnen von in Fig. 1 nicht dargestellten Bodenheizungsrohren vorgesehen.

Die Wärmedämmelemente weisen an ihrer Oberseite Nuten **22** auf, in welche in Fig. 1 nicht dargestellte Installationsleitungen, insbesondere elektrische Leitungen, eingelegt werden können.

Die dargestellten Tragkerne **14** sind im Querschnitt rund, können aber auch eine andere Querschnittsform aufweisen.

Ihr Durchmesser kann einige cm betragen.

Der in der Fig. 2 dargestellte Abschnitt eines Unterlagsbodens **10a** weist im Unterschied zu demjenigen nach der Fig. 1 keine Kränze an den Tragkernen **15** und keine Nuten auf.

Die Fig. 3 zeigt einen der in der Wärmedämmschicht **16** eingebetteten Tragkerne **14** gemäss Fig. 1 in einem Längsschnitt durch den Tragkern. Der die Oberfläche **16a** der Wärmedämmschicht **16** überragende Abschnitt **14a** des Tragkernes **14** ist von dem flanschartigen bzw. kegelartigen Kranz **18** umgeben. Der Kranz **18** besteht vorzugsweise aus dem selben Werkstoff wir die Wärmedämmschicht **16.**

Die Oberfläche **16a** der Wärmedämmschicht **16** sowie diejenige des Kranzes **18** sind mit einer Wärmestrahlung reflektierenden Folie **24** überzogen. Diese Folie **24** kann eine Metallfolie (Aluminium oder Kupfer) oder eine mit einem reflektierenden Werkstoff beschichtete Kunststoffolie sein.

Die Stirnfläche des Tragkernes **14** dient als Tragfläche **14b** zum Auflegen und/oder Befestigen eines Bodenbelages bzw. einer Unterlage davon. Durch die Anordnung des Tragkernes **14** ist die Wärmedämmschicht **16** vollständig entlastet. Der Tragkern **14** wirkt als Trittschalldämpfungskörper und besteht aus einem gummielastischen Werkstoff. Er ist vorzugsweise aus recycliertem Gummigranulat hergestellt. Durch die Mischung des Werkstoffes sowie durch seinen Durchmesser kann der Tragkern **14** entsprechend bemessen werden, um je nach Gebäude und Belastung optimale Eigenschaften zu erzielen.

Der Tragkern **14** kann mit der Wärmedämmschicht verbunden sein, beispielsweise geklebt, oder auch nur eingeschoben.

Die Wärmedämmschicht **16** ist vorzugsweise als selbsttragende Platte ausgebildet. Sie kann beispielsweise aus einem unter dem Markenzeichen Styropor, aus Polystyrol, sowie aus Stein- oder Glaswolle oder aus Korkschrot bestehen. Ihre Dicke beträgt in der Regel 2 bis 12 cm und wird in Abhängigkeit von den geforderten Dämmeigenschaften gewählt.

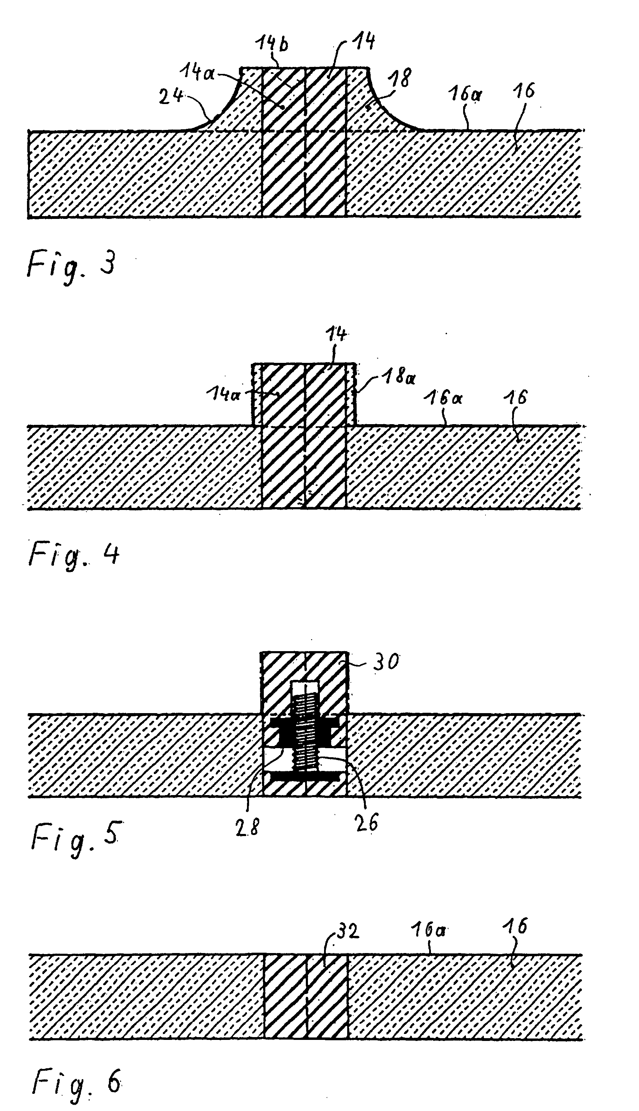

In der Fig. 4 ist der die Oberfläche **16a** der Wärmedämmschicht **16** überragende Abschnitt **14a** des Tragkernes **14** von einem zylindrischen Kranz **18a** aus einem Wärmedämmstoff umgeben.

Die Fig. 5 zeigt einen mittels eines Gewindebolzens **26** und einer Mutter **28** höhenverstellbaren Tragkern **30.**

In der Fig. 6 ist ein Tragkern **32** dargestellt, dessen Tragfläche **32a** mit der Oberfläche **16a** der Wärmedämmschicht **16** bündig ist. Auch bei dieser Ausführung wird die Last vom Tragkern **32** aufgenommen, da dieser im Vergleich zur Wärmedämmschicht **16** weniger eindrückbar ist.

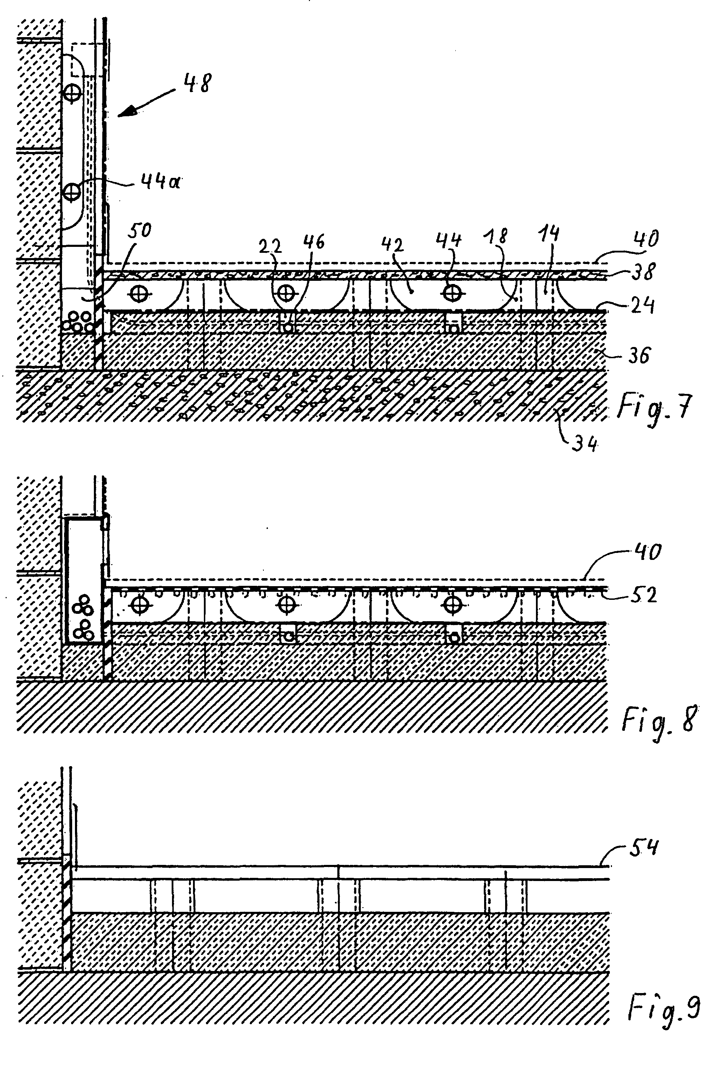

In der Fig. 7 ist auf einem Untergrund 34 eine Wärmedämmplatte **36** als Wärmedämmschicht angeordnet. Auf den Tragkernen **14** liegt eine vorgefertigte Trägerplatte **38** aus armiertem Beton als Unterlage für einen vorzugsweise aufgeklebten Bodenbelag **40**.

Jeder der Tragkerne **14** ist an seinem herausragenden Abschnitt von einem Kranz **18** umgeben. Die Wärmedämmplatte **36** sowie die Kränze **18** sind mit einer Wärmestrahlung reflektierenden Folie **24** überzogen.

In den zwischen der Wärmedämmplatte **36** bzw. der Folie **24** und der Trägerplatte **38** befindlichen Hohlräumen **42** erstrecken sich Bodenheizungsrohre **44**. Die von diesen abgegebene Wärmestrahlung wird von der Folie **24** auf die Trägerplatte **38** reflektiert, welche die Wärme an den Bodenbelag **40** weiterleitet. In den Nuten **22** sind Installationsleitungen **46** verlegt.

In einem Wandabschnitt **48** sind ebenfalls Heizungsrohre **44a** angeordnet. Ferner sind dort Kanäle **50** für weitere Installationsleitungen vorhanden.

Die in der Fig. 8 dargestellte Ausführung unterscheidet sich von derjenigen nach Fig. 7 insbesondere durch die Anordnung eines Lochbleches **52** mit aufgeklebtem Glasfaservlies als Trägerplatte anstelle der armierten Betonplatte **38** in Fig. 7. Eine solche Ausführung gewährleistet einen optimalen Wärmedurchlass.

In der Fig. 9 sind anstelle der Trägerplatte nach den Figuren 7 und 8 Naturstein- oder Zementplatten **54** lose verlegt. Eine solche Ausführung ist vorteilhaft, wenn eine erleichterte Zugänglichkeit zum Unterlagsboden und gegebenenfalls zu den dort angeordneten Installationseinrichtungen gefordert wird.

Der erfindungsgemässe Boden mit wenigstens einem Wärmedämmelement ist besonders zum "Trockenverlegen" geeignet, so dass keine Wartezeiten entstehen und dadurch die Bauarbeiten rationell vorangetrieben werden können.

## Patentansprüche

1. Boden mit wenigstens einem Wärmedämmelement (12) mit einer Wärmedämmschicht (16) und einer im wesentlichen parallel zur Oberfläche der Wärmedämmschicht (16) angeordneten Tragfläche (14b), wobei die Tragfläche (14b) durch die Stirnflächen von sich rechtwinklig zur Ausdehnung des Wärmedämmelementes 12 durch die Wärmedämmschicht (16) hindurch erstreckenden Tragkernen (14; 15; 30; 32) gebildet ist und die Tragfläche (14b) die Wärmedämmschicht (16) überragt, **dadurch gekennzeichnet, dass** Naturstein- oder Zementplatten (54) auf der Tragfläche (14b) lose verlegt sind, zwischen der Oberfläche der Wärmedämmschicht (16) und den lose verlegten Naturstein- oder Zementplatten (54) ein Hohlraum (42) gebildet ist und im Hohlraum (42) ein Heizungsrohr angeordnet ist.

2. Unterlagsboden für einen Bodenbelag (40) mit wenigstens einem Wärmedämmelement mit einer Wärmedämmschicht (16) und einer im wesentlichen parallel zur Oberfläche der Wärmedämmschicht (16) angeordneten Tragfläche (14b), wobei die Tragfläche (14b) durch die Stirnflächen von sich rechtwinklig zur Ausdehnung des Wärmedämmelementes 12 durch die Wärmedämmschicht (16) hindurch erstreckenden Tragkernen (14; 15; 30; 32) gebildet ist, die Tragfläche (14b) die Wärmedämmschicht (16) überragt und eine Unterlage (38,52), die dazu bestimmt ist, den Bodendelag (40) zu tragen, auf der Tragfläche (14b) angeordnet ist, **dadurch gekennzeichnet, dass** zwischen der Oberfläche der Wärmedämmschicht (16) und der Unterlage (38,52) ein Hohlraum (42) gebildet ist und im Hohlraum (42) ein Heizungsrohr angeordnet ist.

3. Boden nach Anspruch 1 oder Unterlagsboden nach Anspruch 2, **dadurch gekennzeichnet, dass** die dem Hohlraum (42) zugekehrte Oberfläche (16a) der Wärmedämmschicht (16) mit einer die Wärmestrahlung reflektierenden Folie (24), vorzugsweise einer Metallfolie oder einer mit einem reflektierenden Werkstoff beschichteten Kunststoffolie bedeckt ist.

4. Boden nach Anspruch 1 oder 3 oder Unterlagsboden nach Anspruch 2 oder 3, **dadurch gekennzeichnet, dass** der Tragkern (14) von einem Kranz (18,18a), vorzugsweise vom Werkstoff der Wärmedämmschicht (16) umgeben ist, dessen Oberfläche (16a) mit einer die Wärmestrahlung reflektierenden Folie (24) bedeckt ist.

5. Boden nach einem der Ansprüche 1, 3 oder 4 oder Unterlagsboden nach einem der Ansprüche 2 bis 4 **dadurch gekennzeichnet, dass** in der Oberfläche (16a) der Wärmedämmschicht (16) mindestens eine zum Einlegen von Installationsleitungen (46) bestimmte Nut (22) angeordnet ist.

6. Boden nach einem der Ansprüche 1 oder 3 bis 5 oder Unterlagsboden nach einem der Ansprüche 2 bis 5, **dadurch gekennzeichnet, dass** die Wärmedämmschicht (16) durch wenigstens eine selbsttragende Wärmedämmplatte (36) gebildet ist.

7. Boden nach einem der Ansprüche 1 oder 3 bis 6 oder Unterlagsboden nach einem der Ansprüche 2 bis 6, **dadurch gekennzeichnet, dass** die Tragkerne (14; 15; 30; 32) als Trittschalldämpfungskörper ausgebildet sind.

8. Boden oder Unterlagsboden nach Anspruch 7, **dadurch gekennzeichnet, dass** die Trittschalldämpfungskörper aus einem gummielastischen Werkstoff bestehen, der aus einem vorzugsweise recyklierten Gummigranulat hergestellt ist.

9. Boden nach einem der Ansprüche 1 oder 3 bis 8 oder Unterlagsboden nach einem der Ansprüche 2 bis 8, **dadurch gekennzeichnet, dass** die Tragkerne (14; 15; 30; 32) rasterartig in einem solchen Abstand voneinander angeordnet sind, dass der Zwischenraum (20) derart bemessen ist, dass eine mit der Montage beschäftigte Person ihren Fuss dazwischen setzen kann, wobei der Zwischenraum vorzugsweise mindestens 10 cm beträgt.

10. Boden nach einem der Ansprüche 1 oder 3 bis 9 oder Unterlagsboden nach einem der Ansprüche 2 bis 9, **dadurch gekennzeichnet, dass** die Tragkerne (30) höhenverstellbar sind.

11. Unterlagsboden nach einem der Ansprüche 2 bis 10, **dadurch gekennzeichnet, dass** die Unterlage (38,52) ein Metallgitter oder Lochblech (52) ist, welches dazu bestimmt ist, einen Bodenbelag (40) zu tragen und die eingestrahlte Wärme auf den Bodenbelag (40) zu übertragen.

12. Unterlagsboden nach einem der Ansprüche 2 bis 11, **dadurch gekennzeichnet, dass** die Unterlage (38,52) mindestens auf der Unterseite derart beschaffen ist, dass sie die Wärmestrahlung aufnimmt.

13. Boden nach einem der Ansprüche 1 oder 3 bis 12 oder Unterlagsboden nach einem der Ansprüche 2 bis 12, **dadurch gekennzeichnet, dass** die Naturstein- oder Zementplatten (54) beziehungsweise die Unterlage (38,52) ausschliesslich durch die Tragkerne (14; 15; 30; 32) abgestützt sind.

14. Boden nach einem der Ansprüche 1 oder 3 bis 13 oder Unterlagsboden nach einem der Ansprüche 2 bis 13, **dadurch gekennzeichnet, dass** mehrere Wärmedämmelemente 12 aneinander angeordnet sind.

## Claims

1. Floor with at least one heat insulating element (12) with a heat insulating layer (16) and a supporting surface (14b) arranged substantially parallel to the surface of the heat insulating layer (16), the supporting surface (14b) being formed by the end faces of supporting cores (14; 15; 30; 32) extending at right angles to the extent of the heat insulating element (12) through the heat insulating layer (16), and the supporting surface (14b) rising up above the heat insulating layer (16a), **characterized in that** natural stone or cement tiles (54) are loosely laid on the supporting surface (14b), a cavity (42) is formed between the surface of the heat insulating layer (16) and the loosely laid natural stone or cement tiles (54) and a heating pipe is arranged in the cavity (42).

2. Subfloor for a floor covering (40) with at least one heat insulating element with a heat insulating layer (16) and a supporting surface (14b) arranged substantially parallel to the surface of the heat insulating layer (16), the supporting surface (14b) being formed by the end faces of supporting cores (14; 15; 30; 32) extending at right angles to the extent of the heat insulating element (12) through the heat insulating layer (16), the supporting surface (14b) rising up above the heat insulating layer (16) and an underlay (38, 52) which is intended for supporting the floor covering (40) being arranged on the supporting surface (14b), **characterized in that** a cavity (42) is formed between the surface of the heat insulating layer (16) and the underlay (38, 52) and a heating pipe is arranged in the cavity (42).

3. Floor according to Claim 1 or subfloor according to Claim 2, **characterized in that** the surface (16a) of the heat insulating layer (16) facing the cavity (42) is covered by a sheet (24) reflecting the heat radiation, preferably a metal foil or a plastic film coated with a reflective material.

4. Floor according to Claim 1 or 3 or subfloor according to Claim 2 or 3, **characterized in that** the supporting core (14) is surrounded by a ring (18, 18a), preferably of material of whose heat insulating layer (16), the surface (16a) of which is covered by a sheet (24) reflecting the heat radiation.

5. Floor according to one of Claims 1, 3 or 4 or subfloor according to one of Claims 2 to 4, **characterized in that** at least one groove (22) intended for the laying of installation lines (46) is arranged in the surface (16a) of the heat insulating layer (16).

6. Floor according to one of Claims 1 or 3 to 5 or subfloor according to one of Claims 2 to 5, **characterized in that** the heat insulating layer (16) is formed by at least one self-supporting heat insulating panel (36).

7. Floor according to one of Claims 1 or 3 to 6 or subfloor according to one of Claims 2 to 6, **characterized in that** the supporting cores (14; 15; 30; 32) are formed as structure-borne sound insulators.

8. Floor or subfloor according to Claim 7, **characterized in that** the structure-borne sound insulators consist of an elastomeric material which is produced from preferably recycled rubber granules.

9. Floor according to one of Claims 1 or 3 to 8 or subfloor according to one of Claims 2 to 8, **characterized in that** the supporting cores (14; 15; 30; 32) are arranged in a grid-like manner at such a distance from one another that the intermediate space (20) is dimensioned such that a person working on installation can place his foot in between, the intermediate space preferably being at least 10 cm.

10. Floor according to one of Claims 1 or 3 to 9 or subfloor according to one of Claims 2 to 9, **characterized in that** the supporting cores (30) are height-adjustable.

11. Subfloor according to one of Claims 2 to 10, **characterized in that** the underlay (38, 52) is a metal grid or perforated plate (52), which is intended for supporting a floor covering (40) and transferring the irradiated heat to the floor covering (40).

12. Subfloor according to one of Claims 2 to 11, **characterized in that** the underlay (38, 52) is made to absorb the heat radiation, at least on the underside.

13. Floor according to one of Claims 1 or 3 to 12 or subfloor according to one of Claims 2 to 12, **characterized in that** the natural stone or cement tiles (54) or the underlay (38, 52) are supported exclusively by the supporting cores (14; 15; 30; 32).

14. Floor according to one of Claims 1 or 3 to 13 or subfloor according to one of Claims 2 to 13, **characterized in that** a number of heat insulating elements (12) are arranged one against the other.

## Revendications

1. Sol avec au moins un élément d'isolation thermique (12), avec une couche d'isolation thermique (16) et une surface porteuse (14b) sensiblement parallèle à la surface de la couche d'isolation thermique (16), moyennant quoi la surface porteuse (14b) est constituée des faces frontales des noyaux porteurs (14 ; 15 ; 30 ; 32) s'étendant perpendiculairement à l'élément d'isolation thermique (12) sur la couche d'isolation thermique (16), et la surface porteuse (14b) dépasse de la couche d'isolation thermique (16), **caractérisé en ce que** des dalles de pierre naturelle ou de ciment (54) sont posées de manière lâche sur la surface porteuse (14b), un espace vide (42) est formé entre la surface de la couche d'isolation thermique (16) et les dalles de pierre naturelle et de ciment (54) et un tuyau de chauffage est disposé dans l'espace vide (42).

2. Sol de base pour un revêtement de sol (40) avec au moins un élément d'isolation thermique, avec une couche d'isolation thermique (16) et une surface porteuse (14b) sensiblement parallèle à la surface de la couche d'isolation thermique (16), moyennant quoi la surface porteuse (14b) est constituée des noyaux porteurs (14 ; 15 ; 30 ; 32) s'étendant perpendiculairement à l'élément d'isolation thermique (12) sur la couche d'isolation thermique (16), la surface porteuse (14b) dépasse de la couche d'isolation thermique (16) et une base (38, 52), destinée à supporter le revêtement de sol (40), se trouve sur la surface porteuse (14b), **caractérisé en ce qu'**entre la surface de la couche d'isolation thermique (16) et la base (38, 52), un espace vide (42) est formé et un tuyau de chauffage est disposé dans l'espace vide (42).

3. Sol selon la revendication 1 ou sol de base selon la revendication 2, **caractérisé en ce que** la surface (16a) de la couche d'isolation thermique (16) orientée du côté de l'espace vide (42) est recouverte d'un film (24) réfléchissant le rayonnement thermique, de préférence un film métallique ou un film de matière plastique revêtu d'un matériau réfléchissant.

4. Sol selon la revendication 1 ou 3 ou sol de base selon la revendication 2 ou 3, **caractérisé en ce que** le noyau porteur (14) est entouré par une couronne (18, 18a), constituée de préférence du matériau de la couche d'isolation thermique (16), dont la surface (16a) est recouverte d'un film (24) réfléchissant le rayonnement thermique.

5. Sol selon l'une des revendications 1, 3 ou 4 ou sol de base selon l'une des revendications 2 à 4, **caractérisé en ce que**, dans la surface (16a) de la couche d'isolation thermique (16) , se trouve au moins une rainure (22) servant à la pose de conduites d'installations (46).

6. Sol selon l'une des revendications 1 ou 3 à 5 ou sol de base selon l'une des revendications 2 à 5, **caractérisé en ce que** la couche d'isolation thermique (16) est constituée d'au moins une plaque d'isolation thermique (36) auto-porteuse.

7. Sol selon l'une des revendications 1 ou 3 à 6 ou sol de base selon l'une des revendications 2 à 6, **caractérisé en ce que** les noyaux porteurs (14 ; 15 ; 30 ; 32) sont conçus comme des amortisseurs de bruits de pas.

8. Sol selon la revendication 7, **caractérisé en ce que** les éléments d'amortissement des bruits de pas sont constitués d'un caoutchouc élastique fabriqué de préférence à partir d'un granulé de caoutchouc recyclé.

9. Sol selon l'une des revendications 1 ou 3 à 8 ou sol de base selon l'une des revendications 2 à 8, **caractérisé en ce que** les noyaux porteurs (14 ; 15 ; 30 ; 32) sont disposés en trame avec un intervalle tel que l'espace vide (20) soit dimensionné de façon à ce que la personne effectuant le montage puisse poser son pied entre eux, moyennant quoi l'espace intermédiaire est de préférence d'au moins 10 cm.

10. Sol selon l'une des revendications 1 ou 3 à 9 ou sol de base selon l'une des revendications 2 à 9, **caractérisé en ce que** les noyaux porteurs (30) sont réglables en hauteur.

11. Sol de base selon l'une des revendications 2 à 10, **caractérisé en ce que** la base (38, 52) est une grille métallique ou une tôle perforée (52) destinée à supporter un revêtement de sol (40) et de transmettre la chaleur rayonnée au revêtement de sol (40).

12. Sol de base selon l'une des revendications 2 à 11, **caractérisé en ce que** la base (38, 52) est conçue, sur le côté inférieur, de façon à absorber le rayonnement thermique.

13. Sol selon l'une des revendications 1 ou 3 à 12 ou sol de base selon l'une des revendications 2 à 12, **caractérisé en ce que** les dalles de pierre naturelle ou de ciment (54) ou la base (38, 52) est supportée exclusivement par les noyaux porteurs (14 ; 15 ; 30 ; 32).

14. Sol selon l'une des revendications 1 ou 3 à 13 ou sol de base selon l'une des revendications 2 à 13, **caractérisé en ce que** plusieurs éléments d'isolation thermique (12) sont disposés les uns à côté des autres.
